(19) Europäisches Patentamt
European Patent Office
Office européen des brevets

(11) Numéro de publication : **0 127 530**
**B1**

# (12) FASCICULE DE BREVET EUROPÉEN

(45) Date de publication du fascicule du brevet : **10.09.86**

(51) Int. Cl.⁴ : **C 08 F 10/00**, C 08 F 4/62

(21) Numéro de dépôt : **84401034.8**

(22) Date de dépôt : **18.05.84**

(54) **Procédé de préparation d'une composante de métal de transition pour un système catalytique de polymérisation d'oléfines.**

(30) Priorité : **25.05.83 FR 8308603**

(43) Date de publication de la demande : **05.12.84 Bulletin 84/49**

(45) Mention de la délivrance du brevet : **10.09.86 Bulletin 86/37**

(84) Etats contractants désignés : **AT BE DE FR GB IT NL SE**

(56) Documents cités :
**EP-A- 0 015 048**
**FR-A- 2 439 795**
**FR-A- 2 453 183**

(73) Titulaire : **ATOCHEM**
**4 & 8, Cours Michelet La Défense 10**
**F-92800 Puteaux (FR)**

(72) Inventeur : **Lacombe, Jean-Loup**
**24, Avenue Montilleul**
**F-64000 Pau (FR)**
Inventeur : **Brun, Claude**
**Clos Saint-Pierre**
**F-64320 Idron Bizanos (FR)**

**EP 0 127 530 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention a pour objet un procédé de préparation d'une composante de métal de transition pour un système catalytique de polymérisation d'oléfines. Elle se rapporte encore au système catalytique renfermant ladite composante et concerne également un procédé de synthèse d'un polymère ou copolymère oléfinique faisant appel audit système catalytique.

On sait que l'on peut produire des polymères ou copolymères oléfiniques de hautes masses moléculaires et à faible taux de cendres en polymérisant ou copolymérisant des oléfines telles que l'éthylène et ses homologues supérieurs, notamment propène, butène-1, pentène-1, méthyl-4 pentène-1, hexène-1, octène-1, au moyen de systèmes catalytiques de type Ziegler-Natta résultant de l'association d'une composante de métal de transition avec un cocatalyseur consistant le plus souvent en un composé hydrocarbylaluminium ou hydrocarbylmagnésium. La composante de métal de transition est généralement obtenue en associant un composé de métal de transition, notamment un composé de titane tel que $TiCl_4$, $TiCl_3$ ou un titanate d'alcoyle, avec un composé de magnésium, en particulier un composé renfermant $MgCl_2$, et éventuellement un composé organique donneur d'électrons et le cas échéant un support poreux organique ou inorganique.

On connaît un procédé de préparation d'une telle composante de métal de transition, qui consiste à former, tout d'abord, un produit de réaction, ou complexe, organo-magnésium-aluminium soluble dans les hydrocarbures par réaction, dans un hydrocarbure inerte, d'un dialcoylmagnésium ou d'un halogénure de magnésium alcoyle avec un alcoylaluminium, puis à soumettre le produit de réaction obtenu à une chloration par HCl et enfin à traiter le produit solide résultant de cette chloration, qui renferme $MgCl_2$, par un composé de métal de transition tel qu'un titanate d'alcoyle.

En étudiant le schéma réactionnel précité, qui aboutit à la composante de métal de transition, la demanderesse a trouvé que l'on pouvait obtenir des résultats améliorés en remplaçant par un composé aluminoxane, tel que défini ci-après, le composé alcoylaluminium mis en réaction avec le composé dialcoylmagnésium ou halogénure de magnésium alcoyle pour former le produit de réaction, ou complexe, organo-magnésium-aluminium.

En effet, l'utilisation du composé aluminoxane conduit à une composante de métal de transition plus active, qui confère une plus grande activité et une meilleure aptitude à la copolymérisation au système catalytique résultant de l'association de cette composante à un cocatalyseur. En outre le composé aluminoxane est moins réactif que le composé alcoylaluminium et de ce fait sa manipulation est plus facile.

Le procédé suivant l'invention pour la préparation d'une composante de métal de transition pour un système catalytique de polymérisation d'oléfines est du type dans lequel on forme un produit de réaction organo-magnésium-aluminium par réaction, dans un milieu liquide, d'un composé halogéné, alcoylé ou alcoxylé de magnésium avec un composé organo-aluminium, puis on soumet le produit de réaction à une chloration et à un traitement par un composé d'un métal de transition choisi parmi Ti, V, Zr et Cr, et il se caractérise en ce qu'à titre de composé organoaluminium on utilise au moins un composé aluminoxane de formule générale

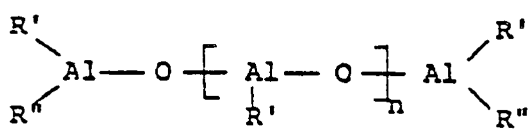

dans laquelle R' désigne un radical alcoyle en $C_1$ à $C_{16}$, et de préférence en $C_1$ à $C_{12}$, les R" forment ensemble un radical bivalent —O— ou désignent chacun un radical R', et n est un nombre entier prenant les valeurs de 0 à 20, et de préférence de 0 à 12.

Le composé de magnésium, qui est mis en réaction avec le composé aluminoxane, répond à la formule Ya $Mg_m$ Xb, dans laquelle Y désigne un radical alcoyle ou alcoxy en $C_1$ à $C_{12}$, et de préférence en $C_1$ à $C_8$, X représente un radical Y ou un atome d'halogène, et de préférence un atome de chlore, m est un nombre égal ou supérieur à 1, et a et b sont des nombres égaux ou supérieurs à 0 et tels que $a + b = 2 m$.

Des exemples de tels composés sont notamment chlorure de magnésium éthyle, chlorure de magnésium butyle, di-n-butylmagnésium, di-isobutylmagnésium, di-n-hexylmagnésium, di-n-octylmagnésium, et $(C_4H_9)_3Mg_2(C_2H_5)$.

Les composés aluminoxanes préférés sont ceux pour lesquels, dans la formule précitée, R' et R" désignent chacun un radical alcoyle en $C_1$ à $C_{12}$, et mieux en $C_1$ à $C_6$, et n est un nombre entier allant de 0 à 12, et mieux de 0 à 8. A titre d'exemples de tels composés, on peut citer le tétraisobutyldialuminoxane R' = R" = isobutyle ; n = o), et l'hexaisobutyltétraaluminoxane (R' = R" = isobutyle ; n = 2).

La réaction entre le composé de magnésium de formule Ya $Mg_m$ Xb et le composé aluminoxane est effectuée dans un milieu liquide inerte vis-à-vis des réactifs ou encore en l'absence d'un tel milieu si l'un au moins desdits réactifs est un liquide. Ledit milieu inerte peut consister notamment en un hydrocarbure aliphatique tel que pentane, heptane ou hexane, en un hydrocarbure aromatique tel que benzène, toluène, xylène, ou encore en un hydrocarbure cycloaliphatique tel que cyclohexane ou méthylcyclo-

hexane. La température utilisée pour cette réaction n'est pas critique et peut varier par exemple de —40 °C à la température d'ébullition à pression atmosphérique du milieu liquide employé. Les proportions du composé de magnésium de formule Ya $Mg_m$ Xb et du composé aluminoxane, que l'on fait réagir l'un sur l'autre, sont avantageusement telles que le rapport du nombre de moles du composé de magnésium au nombre de moles du composé aluminoxane dans le milieu réactionnel est compris entre 0,1 et 100 et se situe de préférence entre 0,5 et 20.

Suivant l'invention, le produit organo-magnésium-aluminium résultant de la réaction entre le composé Ya $Mg_m$ Xb et le composé aluminoxane est ensuite soumis à une chloration et à un traitement avec un composé d'un métal de transition choisi parmi Ti, V, Zr et Cr.

L'ordre dans lequel s'effectue la chloration et le traitement avec le composé de métal de transition n'est pas critique. On peut par exemple soumettre le produit de réaction organo-magésium-aluminium à une chloration, puis traiter le produit résultant de la chloration par le composé de métal de transition. On peut encore opérer dans l'ordre inverse, c'est-à-dire traiter le produit organo-magnésium-aluminium par le composé de métal de transition, puis soumettre le produit résultant à une chloration.

La chloration peut être mise en œuvre par mise en contact du produit à chlorer directement avec un agent de chloration ; toutefois pour obtenir une homogénéité satisfaisante, il est préférable d'effectuer la chloration dans un milieu liquide inerte, qui peut être similaire à celui employé pour préparer le produit de réaction organo-magnésium-aluminium. La température utilisée pour la chloration n'est pas critique, et peut varier, par exemple de 0 °C à 100 °C. Comme agents de chloration conviennent notamment le chlore, $SOCl_2$, $SiCl_4$, et de préférence HCl anhydre. La quantité d'agent de chloration est telle que le rapport du nombre d'atomes de chlore fourni par l'agent de chloration au nombre d'atomes de magnésium du composé Ya $Mg_m$ Xb mis en réaction avec le composé aluminoxane est supérieur à 2, et en particulier compris entre 2 et 100.

Le traitement par le composé de métal de transition du produit organo-magnésium-aluminium ou du produit correspondant résultant de la chloration, est également mis en œuvre avantageusement dans un milieu liquide inerte, qui est en particulier analogue à celui utilisé pour la chloration ou pour la préparation du composé organo-magnésium-aluinium. Ledit traitement est réalisé à une température, qui peut varier assez largement et se situe en particulier entre —30 °C et 200 °C et de préférence entre 0 °C et 150 °C. Pour ce traitement conviennent de préférence les composés de Ti, V, Zr et Cr choisi parmi $TiCl_4$, $TiCl_3$, $VCl_4$, $VOCl_3$, $CrCl_3$, $CrO_3$, acétylacétonate de vanadium, acétylacétonate de chrome, $Ti(OR)_pCl(4\text{-}p)$ et Zr(OR)pCl(4-p), R désignant un radical alcoyle en $C_1$ à $C_8$ et p étant un nombre entier allant de 1 à 4. Il est possible de réaliser en une seule étape la chloration et le traitement par le composé de métal de transition, en choisissant comme agent de chloration un chlorure de Ti, V, Zr ou Cr et notamment $TiCl_4$.

Suivant une forme de mise en œuvre particulière du procédé suivant l'invention, la préparation de la composante de métal de transition est réalisée en présence d'un adjuvant consistant en un support poreux inorganique ou organique, qui peut être choisi par exemple dans le groupe formé par $SiO_2$, $Al_2O_3$, $TiO_2$, $ZrO_2$, les zéolithes et les oxydes mixtes renfermant $SiO_2$ et un ou plusieurs oxydes métalliques pris parmi $ZrO_2$, $TiO_2$, MgO et $Al_2O_3$. Cet adjuvant peut être incorporé au produit de réaction entre le composé de magnésium et le composé aluminoxane, ladite incorporation pouvant se faire soit lors de la formation du milieu de réaction entre lesdits composés, soit au cours de la réaction, ou encore lorsque la réaction de production du composé organo-magnésium-aluminium est terminée. Dans le cas où l'on traite le produit organo-magnésium-aluminium, résultant de la réaction entre le composé de magnésium Ya $Mg_m$ Xb et le composé aluminoxane, par un composé de métal de transition puis soumet le produit résultant à une chloration, l'adjuvant peut être incorporé au milieu issu du traitement du composé organo-magnésium-aluminium par le composé de métal de transition avant l'étape de chloration. Par contre, lorsque l'on soumet le produit organo-magnésium-aluminium à une chloration puis traite le produit résultant de cette chloration par un composé de métal de transition, on dissout le produit résultant de la chloration dans un solvant inerte, par exemple le tétrahydrofuranne ou encore un alcool tel que le méthanol, et imprègne l'adjuvant au moyen de la solution obtenue, puis l'on traite l'adjuvant imprégné par le composé de métal de transition. On peut encore associer l'adjuvant, par cobroyage ou par mélangeage en suspension dans un liquide inerte, au produit obtenu à l'issue de celles des étapes de chloration et de traitement par le composé de métal de transition, qui est la dernière dans le processus. On peut enfin dissoudre le produit obtenu à l'issue de ladite dernière étape, dans un solvant inerte, notamment le tétrahydrofuranne ou un alcool tel que le méthanol, et imprégner l'adjuvant à l'aide de la solution résultante.

Un donneur d'électrons consistant en une base de Lewis peut être également associé à la composante de métal de transition. Ceci peut être réalisé directement par mélangeage à l'issue de la préparation de ladite composante. On peut encore incorporer le donneur d'électrons à la composante de métal de transition en un point quelconque du processus d'obtention de cette dernière, et en particulier au cours de l'étape de réaction du composé de magnésium Ya $Mg_m$ Xb avec le composé aluminoxane ou à l'issue de ladite étape et avant l'étape ultérieure, qui peut être suivant le cas l'étape de chloration, l'étape de traitement par le composé de métal de transition, ou encore l'étape d'addition de l'adjuvant.

Le donneur d'électrons peut être avantageusement choisi parmi les acides carboxyliques aliphatiques ou aromatiques et leurs esters alcoyliques, les éthers aliphatiques ou cycliques, les cétones, les

esters vinyliques, les dérivés acryliques, en particulier acrylates ou méthacrylates d'alcoyle, et les silanes. Conviennent notamment comme donneurs d'électrons les composés tels que paratoluate de méthyle, benzoate d'éthyle, acétate d'éthyle ou de butyle, éther éthylique, para-anisate d'éthyle, tétrahydrofuranne, dioxane, acétone, méthylisobutylcétone, acétate de vinyle, méthacrylate de méthyle et phényltriéthoxysilane.

Dans la préparation de la composante de métal de transition, le composé de métal de transition est utilisé en quantité telle que ladite composante renferme en particulier 0,01 % à 40 %, et de préférence 0,1 % à 20 %, en poids de métal de transition.

Lorsque l'adjuvant est utilisé, sa proportion peut représenter 5 % à 99,5 % et, de préférence, 40 % à 85 % du poids de la composante de métal de transition le contenant.

La quantité du donneur d'électrons, éventuellement présent, peut varier assez largement. Elle se situe avantageusement dans un intervalle tel que le rapport du nombre d'atomes de magnésium de la composante de métal de transition au nombre de molécules de donneur d'électrons soit compris entre 0,5 et 200 et de préférence entre 1 et 100.

La composante de métal de transition, préparée comme indiqué précédemment, est utilisable en association avec un cocatalyseur choisi parmi les composés organométalliques des métaux des groupes I à III du Tableau Périodique des Eléments pour constituer un système catalytique approprié pour la polymérisation des oléfines.

Le cocatalyseur, associé à la composante de métal de transition, est choisi en particulier parmi les composés organomagnésium de formule Ya $Mg_m$ Xb, l'isoprénylaluminium, les aluminoxanes définis précédemment et les composés organoaluminium de formule $Al(R')_qM_rH_s$ dans laquelle M représente Cl ou OR', R' désigne un radical alcoyle en $C_1$ à $C_{16}$, et de préférence en $C_1$ à $C_{12}$, tandis que q, r et s sont des nombres tels que $1 \leq q \leq 3$, $0 \leq r \leq 2$ et $0 \leq s \leq 2$ avec $q + r + s = 3$. De préférence le cocatalyseur est choisi parmi l'isoprénylaluminium, les composés organomagnésium de formule Ya $Mg_m$Xb et les composés organoaluminium de formule $AlR''_xCl(3\text{-}x)$, dans laquelle R'' désigne un radical alcoyle en $C_1$ à $C_8$ et x est un nombre tel que $1 \leq x \leq 3$. Des exemples de ces composés sont tels que triéthylaluminium, triisopropylaluminium, tri-isobutylaluminium, tri-n-hexylaluminium, tri-n-octylaluminium, chlorure de diéthylaluminium, isoprénylaluminium, dibutylmagnésium, di-n-hexylmagnésium.

La composante de métal de transition et le cocatalyseur sont associés dans des proportions telles que le rapport du nombre d'atomes de métal des groupes I à III du Tableau Périodique des Eléments contenu dans le cocatalyseur au nombre d'atomes de métal de transition de ladite composante se situe entre 0,5 et 1 000 et de préférence entre 1 et 400.

Le système catalytique peut être préformé, par mise en contact de la composante de métal de transition avec le cocatalyseur, avant d'être amené au contact des oléfines à polymériser. On peut également ajouter la composante de métal de transition et le cocatalyseur séparément dans la zone de polymérisation des oléfines pour former le système catalytique in situ.

Que la composante de métal de transition renferme ou non un donneur d'électrons, on peut ajouter un tel composé, choisi parmi les donneurs d'électrons définis précédemment, au système catalytique résultant de l'association du cocatalyseur avec la composante de métal de transition ou encore au cocatalyseur avant la mise en contact de ce dernier avec la composante de métal de transition pour former le système catalytique, ou bien mettre en contact simultanément le donneur d'électrons avec les deux autres composantes du système catalytique. La quantité de donneur d'électrons est avantageusement telle que le rapport du nombre d'atomes de métal des groupes I à III du Tableau Périodique des Eléments, et notamment d'aluminium ou de magnésium, issus du cocatalyseur au nombre de molécules de donneur d'électrons se situe entre 1 et 50.

Les oléfines susceptibles d'être polymérisées ou copolymérisées au moyen du système catalytique résultant de l'association de la composante de métal de transition suivant l'invention avec le cocatalyseur et éventuellement un donneur d'électrons tels que définis plus haut, incluent non seulement les hydrocarbures en $C_2$ à $C_{18}$ présentant une insaturation éthylénique unique, et en particulier les mono-oléfines en $C_2$ à $C_{18}$ telles qu'éthylène, propène, butène-1, pentène-1, hexène-1, méthyl-4 pentène-1, octène-1, décène-1, dodécène-1, tridécène-1, hexadécène-1, octadécène-1, mais encore les diènes conjugués ou non conjugués, notamment butadiène, isopropène, hexadiène-1,4, hexadiène-1,5, vinylnorbornène, éthylidènenorbornène.

Le système catalytique précité est tout particulièrement utilisable pour la polymérisation des mono-oléfines en $C_2$ à $C_{12}$, comme par exemple éthylène, propène, butène-1 et hexène-1.

On peut notamment polymériser une mono-oléfine unique en $C_2$ à $C_{12}$, par exemple éthylène, propène, butène-1, hexène-1, au contact du système catalytique en vue de produire l'homopolymère correspondant à cette mono-oléfine.

On peut encore polymériser des mélanges d'au moins deux oléfines en $C_2$ à $C_{12}$ au contact dudit système catalytique, en vue de produire des copolymères desdites oléfines. On peut notamment polymériser des mélanges d'éthylène et d'une ou plusieurs alpha-oléfines en $C_3$ à $C_{12}$, lesdits mélanges, lorsqu'ils sont au contact du système catalytique, renfermant une proportion molaire globale d'alpha-oléfines en $C_3$ à $C_{12}$ comprise entre 0,1 et 90 % et de préférence entre 1 et 60 %.

On peut également polymériser des mélanges de propène avec l'éthylène et/ou une ou plusieurs alpha-oléfines en $C_4$ à $C_{12}$, lesdits mélanges, lorsqu'ils sont au contact du système catalytique,

renfermant une proportion molaire globale d'éthylène et/ou d'apha-oléfines en $C_4$ à $C_{12}$ comprise entre 0,1 et 90 % et de préférence entre 1 et 60 %.

On peut encore polymériser des mélanges d'éthylène et de propène, avec ou sans autres alpha-oléfines ou dioléfines, tels que le rapport molaire éthylène : propène soit compris entre 0,02 et 50 et de préférence entre 0,05 et 1.

La polymérisation des oléfines précitées, et en particulier des mono-oléfines en $C_2$ à $C_{12}$ prises seules ou en mélanges, comme indiqué plus haut, au moyen du système catalytique défini précédemment peut être mise en œuvre en solution ou en suspension dans un milieu liquide inerte, et notamment dans un hydrocarbure aliphatique tel que n-heptane, n-hexane, isobutane, ou encore en masse dans l'une au moins des oléfines à polymériser maintenue à l'état liquide ou hypercritique.

Les conditions opératoires, notamment températures, pressions, quantité de système catalytique, pour ces polymérisations en phase liquide sont celles, qui sont habituellement proposées pour des cas similaires faisant appel à des systèmes catalytiques conventionnels de type Ziegler Natta supporté ou non.

Par exemple pour une polymérisation conduite en suspension ou en solution dans un milieu liquide inerte, on peut opérer à des températures allant jusqu'à 250 °C et sous des pressions allant de la pression atmosphérique à 250 bars. Dans le cas d'une polymérisation en milieu propène liquide, les températures peuvent aller jusqu'à 250 °C et les pressions peuvent être comprises entre la pression atmosphérique et 50 bars. Pour une polymérisation ou copolymérisation de l'éthylène en masse conduisant à des polyéthylènes ou à des copolymères majoritaires en éthylène, on peut opérer à des températures comprises entre 130 °C et 350 °C et sous des pressions allant de 200 à 3 500 bars.

Le système catalytique obtenu par association de la composante de métal de transition suivant l'invention avec un cocatalyseur et éventuellement un donneur d'électrons tels que définis plus haut, peut être encore utilisé pour la polymérisation en phase gazeuse des oléfines ou des mélanges d'oléfines, qui viennent d'être cités. En particulier on peut polymériser en phase gazeuse, au contact dudit système catalytique, un mélange d'éthylène et d'une ou plusieurs alpha-oléfines en $C_3$ à $C_{12}$ telles que propène, butène-1, hexène-1, méthyl-4 pentène-1 et octène-1, renfermant, lorsqu'il est au contact du système catalytique, une proportion molaire de l'alpha-oléfine ou des alpha-oléfines en $C_3$ à $C_{12}$ comprise entre 0,1 et 90 %, et de préférence entre 1 et 60 %, en vue de produire un copolymère éthylène/alpha-oléfine à teneur molaire minoritaire en alpha-oléfine en $C_3$ à $C_{12}$, connu sous le nom de polyéthylène linéaire basse densité.

La polymérisation en phase gazeuse de l'oléfine ou des oléfines au contact du système catalytique peut être effectuée dans tout réacteur permettant une polymérisation en phase gazeuse et en particulier dans un réacteur à lit agité ou à lit fluidisé. Les conditions de mise en œuvre de la polymérisation en phase gazeuse, notamment température, pression, injection de l'oléfine ou des oléfines dans le réacteur à lit agité ou à lit fluidisé, contrôle de la température et de la pression de polymérisation, sont analogues à celles proposées dans l'art antérieur pour la polymérisation en phase gazeuse des oléfines. On opère généralement à une température inférieure au point de fusion Tf du polymère ou copolymère à synthétiser, et plus particulièrement comprise entre — 20 °C et (Tf 5) °C, et sous une pression telle que l'oléfine ou les oléfines, et éventuellement les autres monomères hydrocarbonés présents dans le réacteur soient essentiellement en phase vapeur.

La polymérisation en solution, en suspension, en masse, ou en phase gazeuse peut être réalisée en présence d'un agent de transfert de chaînes, notamment hydrogène ou encore alcoyl zinc tel que zinc diéthyle, de manière à contrôler l'indice de fusion du polymère ou copolymère à produire. L'agent de transfert de chaînes préféré est l'hydrogène, que l'on utilise en quantité pouvant aller jusqu'à 80 %, et se situant de préférence entre 0,1 et 40 % du volume de l'ensemble oléfines et hydrogène amené au réacteur.

La composante de métal de transition suivant l'invention peut encore être utilisée comme composante de métal de transition pour la préparation du solide hydrocarboné actif, utilisable pour polymériser des oléfines, tel que défini dans la demande de brevet français N° 83 03229 du 28 Février 1983 au nom de la demanderesse (& EP-A-120734).

La composante de métal de transition suivant l'invention peut également être utilisée pour la préparation d'un prépolymère actif, qui est utilisable seul ou en association avec un cocatalyseur choisi parmi les composés de magnésium de formule Ya $Mg_m$ Xb, l'isoprépylaluminium, les aluminoxanes définis par la formule donnée plus haut et les composés organoaluminium de formule $Al(R')_qM_rH_s$, pour former un système catalytique utilisable pour la polymérisation ou copolymérisation en masse de l'éthylène conduisant à des polyéthylènes homopolymères ou à des copolymères majoritaires en éthylène comme les copolymères d'éthylène et d'une ou plusieurs alpha-oléfines en $C_3$ à $C_{12}$ connus sous le nom de polyéthylènes linéaires basse densité, en opérant sous des pressions allant de 200 à 3 500 bars et de préférence de 800 à 2 500 bars et à des températures allant de 130 °C à 350 °C.

Ledit prépolymère actif est obtenu en mettant en contact une ou plusieurs alpha-oléfines en $C_4$ à $C_{12}$ avec un système catalytique formé en associant la composante de métal de transition suivant l'invention avec un cocatalyseur choisi parmi les composés cités plus haut dans ce but et employés dans les proportions indiquées précédemment, ladite oléfine ou lesdites oléfines en $C_4$ à $C_{12}$ étant utilisées en quantité représentant 2 à 100 moles et de préférence 2 à 50 moles de l'oléfine ou des oléfines en $C_4$ à $C_{12}$ par atome gramme de métal de transition de la composante de métal de transition.

L'invention est illustrée par les exemples suivants donnés à titre non limitatif.

Exemples 1 à 6

Les exemples 1 à 5 sont réalisés suivant l'invention tandis que l'exemple 6 est donné à titre de comparaison.

a) Préparation de la composante de métal de transition :

On opérait dans un réacteur de 1 litre équipé d'un dispositif d'agitation et muni d'une double enveloppe parcourue par un fluide caloporteur pour le maintien du réacteur en température.

Dans le réacteur purgé par circulation d'azote, on introduit un composé alcoylmagnésium, un composé aluminoxane (exemples 1 à 5) ou un alcoylaluminium chloré (exemple 6), 100 ml d'heptane, et éventuellement un donneur d'électrons. On obtenait une solution, qui était maintenue sous agitation à 80 °C pendant deux heures. Après retour à la température ambiante, on ajoutait 20 g de silice au contenu du réacteur, puis agitait la suspension obtenue durant 30 minutes. La suspension ainsi formée était soumise à une chloration par injection d'HCl anhydre à raison de 0,5 mole/heure pendant 1 heure. Après filtration du milieu réactionnel résultant de la chloration, on isolait un solide que l'on remettait en suspension dans l'heptane. La suspension obtenue était alors additionnée de $TiCl_4$ et le tout était maintenu sous agitation à température ambiante pendant 1 heure. Le milieu réactionnel résultant de ce traitement était alors filtré et le solide recueilli était séché, puis stocké en boîte à gants en atmosphère inerte.

Les conditions opératoires spécifiques à chaque exemple ainsi que la composition de la composante de titane obtenue sont données dans le tableau I.

(Voir Tableau I page 7)

Tableau I

| Exemple | Alcoylmagnésium | | Composé d'aluminium | | Donneur d'électrons | | $TiCl_4$ (millimoles) | Analyse de la composante de métal de transition (% en poids) | | |
|---|---|---|---|---|---|---|---|---|---|---|
| | Nature | Quantité millimoles | Nature | Quantité millimoles | Nature | Quantité millimoles | | Mg | Ti | Al |
| 1 | DBM α) | 40 | TIBAO γ) | 10 | — | — | 5 | 2,9 | 0,3 | 2,0 |
| 2 | DBME β) | 50 | HIBTAO δ) | 12,5 | MPT λ) | 1 | 7 | 3,3 | 0,7 | 3,3 |
| 3 | DBME | 60 | TIBAO | 15 | MPT | 1 | 7 | 3,5 | 0,65 | 2,1 |
| 4 | DBME | 30 | TIBAO | 7,5 | BE μ) | 1 | 5 | 1,8 | 0,9 | 1,2 |
| 5 | DBME | 60 | TIBAO | 15 | PTES η) | 1 | 5 | 4 | 0,3 | 2,4 |
| 6 | DBME | 60 | DEAC ε) | 15 | MPT | 1 | 7 | 3,8 | 1 | 0,8 |

α) : DBM = dibutylmagnésium
β) : DBME = $(C_4H_9)_3Mg_2(C_2H_5)$
γ) : TIBAO = tétraisobutyldialuminoxane
δ) : HIBTAO = hexaisobutyltetraaluminoxane

ε) : DEAC = chlorure d'aluminium diéthyle
λ) : MPT = paratoluate de méthyle
μ) : BE = benzoate d'éthyle
η) : PTES = phényltriéthoxysilane

b) Polymérisation d'éthylène et de butène-1 en phase gazeuse au contact d'un système catalytique obtenu à partir de la composante de métal de transition :

On opérait dans un réacteur muni d'un agitateur tournant avec une vitesse de rotation de 400 tours/minute, ledit réacteur étant chauffé à la température de 85 °C.

Dans le réacteur agité, après séchage et purge à l'azote, on introduisait 20 g d'un polyéthylène linéaire basse densité présentant une granulométrie comprise entre 800 et 1 250 µm et, à titre de cocatalyseur, du tri-n-hexylaluminium. On injectait ensuite dans le réacteur, successivement, 3 bars de butène-1, 1,6 bar d'hydrogène et 11 bars d'éthylène. Ces injections étant terminées, on introduisait dans le réacteur la composante de titane obtenue dans la partie a) des exemples 1 à 6, ladite introduction étant réalisée par poussée à l'aide de 2,5 bars d'azote. Après cette introduction de la composante de titane, la pression dans le réacteur était amenée à 20 bars par injection d'éthylène. On maintenait ensuite à cette valeur la pression dans le réacteur par injection d'un mélange d'éthylène et de butène-1 dans un rapport molaire butène-1 : éthylène égal à 0,046.

Après 4 heures de réaction on arrêtait la polymérisation par décompression du réacteur, purge à l'azote et refroidissement dudit réacteur, et l'on recueillait le copolymère éthylène/butène-1 formé, ledit copolymère étant connu dans l'art sous le nom de polyéthylène linéaire basse densité.

Les conditions opératoires spécifiques à chaque exemple et les résultats obtenus sont donnés dans le tableau II.

Tableau II

| Exemple | Composante de titane (mg) | TNHA a) (millimoles) | Activité b) | Caractéristiques du copolymère | | |
|---|---|---|---|---|---|---|
| | | | | densité | MI c) | MFR d) |
| 1 | 100 | 5 | 3000 | 0,922 | 3,1 | 32,2 |
| 2 | 100 | 5 | 3200 | 0,923 | 2,9 | 31,9 |
| 3 | 200 | 12 | 2850 | 0,921 | 0,82 | 32 |
| 4 | 80 | 5 | 3500 | 0,921 | 1,65 | 31,5 |
| 5 | 80 | 5 | 4350 | 0,922 | 1,8 | 31,4 |
| 6 | 200 | 12 | 2000 | 0,926 | 2,45 | 35,8 |

a) : TNHA = tri n-hexylaluminium

b) : Activité = g de polymère produit par gamme de composante de titane et par heure

c) : MI = indice de fusion MI $_{190\,°C}^{2,16}$ déterminé suivant la norme ASTMD 1238

d) : MFR = rapport entre l'indice de fusion MI $_{190\,°C}^{2,16}$ et l'indice de fusion MI $_{190\,°C}^{21,6}$

En comparant les résultats des exemples 2 (suivant l'invention) et 6 (témoin) réalisés dans des conditions opératoires similaires, il apparaît que la composante de métal de transition suivant l'invention conduit à un système catalytique présentant une activité substantiellement améliorée par rapport à celle du système catalytique obtenu à partir d'une composante de métal de transition préparée en utilisant un composé organo-aluminium traditionnel (DEAC) pour la réaction avec le composé alcoylmagnésium.

Exemple 7

a) Préparation de la composante de métal de transition :

On opérait dans un réacteur de 1 litre équipé d'un dispositif d'agitation et muni d'une double enveloppe parcourue par un fluide caloporteur pour le maintien du réacteur en température.

Dans le réacteur purgé par circulation d'azote, on introduisait 40 millimoles de dibutylmagnésium, 10 millimoles de TIBAO et 100 ml d'heptane. On obtenait une solution, qui était maintenue sous agitation à 80 °C pendant 2 heures. Après refroidissement à la température ambiante, on ajoutait 6 millimoles de $TiCl_4$ au contenu du réacteur et agitait le milieu réactionnel obtenu durant 30 minutes. On introduisait ensuite 20 g de silice dans le réacteur et maintenait la suspension obtenue sous agitation à température ambiante pendant 1 heure, puis soumettait ladite suspension à une chloration par addition d'HCl anhydre au contenu du réacteur, ladite addition étant réalisée à raison de 0,5 mole/heure pendant 1 heure. Le milieu réactionnel résultant du traitement de chloration était alors filtré et le solide recueilli était séché, puis stocké en boîte à gants en atmosphère inerte. Le solide obtenu, qui constitue la composante de métal de transition suivant l'invention, renfermait, en poids, 2,6 % de Mg, 1 % de Ti et 1,9 % d'Al.

b) Polymérisation d'éthylène et de butène-1 en phase gazeuse au contact d'un système catalytique obtenu à partir de la composante de métal de transition :

On opérait dans un réacteur muni d'un agitateur tournant avec une vitesse de rotation de 400 tours/minute, ledit réacteur étant chauffé à la température de 85 °C. Dans le réacteur agité, après séchage et purge à l'azote, on introduisait 20 g d'un polyéthylène linéaire basse densité ayant une granulométrie comprise entre 800 et 1 250 µm et, à titre de cocatalyseur, 9 millimoles de TNHA. On injectait ensuite dans le réacteur, successivement, 3 bars de butène-1, 1,6 bars d'hydrogène et 11 bars d'éthylène. Ces injections étant terminées, on introduisait dans le réacteur 200 mg de la composante de titane obtenue dans la partie a) de cet exemple, ladite introduction étant réalisée par poussée à l'aide de 2,5 bars d'azote. Après ladite introduction de la composante de titane, la pression dans le réacteur était amenée à 20 bars par injection d'éthylène. On maintenait ensuite à cette valeur la pression dans le réacteur par injection d'un mélange d'éthylène et de butène-1 dans un rapport molaire butène-1 : éthylène égal à 0,046. Après 4 heures de réaction on arrêtait la polymérisation par décompression du réacteur, purge à l'azote et refroidissement dudit réacteur, et l'on recueillait le copolymère éthylène/butène-1 formé.

Le copolymère produit, obtenu avec une activité du système catalytique égal à 2 500, avait une densité égale à 0,923, un indice de fusion ($MI_{2,16}$ 190 °C) de 2,5 et une valeur de MFR égale à 32.

Exemple 8

a) Préparation de la composante de métal de transition :

On opérait dans un réacteur de 1 litre équipé d'un dispositif d'agitation et muni d'une double enveloppe parcourue par un fluide caloporteur pour le maintien du réacteur en température.

Dans le réacteur purgé par circulation d'azote, on introduisait 60 millimoles de DBME, 15 millimoles de TIBAO et 100 ml d'heptane. On obtenait une solution, qui était maintenue sous agitation à 80 °C pendant deux heures. Après refroidissement à la température ambiante, la solution était soumise à une chloration par injection d'HCl anhydre (0,5 mole/heure pendant 1 heure). On obtenait un précipité que l'on traitait par le tétrahydrofuranne pour le dissoudre. A la solution obtenue on ajoutait 20 g de silice et maintenait la suspension obtenue sous agitation pendant 30 minutes à température ambiante. Le solide obtenu après filtration de cette suspension était dispersé à nouveau dans l'heptane. A la suspension résultante on ajoutait alors 10 millimoles de $TiCl_4$ et le milieu réactionnel obtenu était maintenu sous agitation à température ambiante pendant 1 heure. Le contenu du réacteur était alors filtré et la fraction solide recueille était séchée, puis stockée en boîte à gants sous atmosphère inerte.

Le solide obtenu, qui constitue la composante de métal de transition suivant l'invention, renfermait, en poids, 4,1 % de Mg, 1,2 % de Ti et 1,8 % d'Al.

b) Polymérisation d'éthylène et de butène-1 en phase gazeuse au contact d'un système catalytique obtenu à partir de la composante de métal de transition :

On opérait comme décrit dans la partie b) de l'exemple 7 en utilisant 150 mg de la composante de titane préparée comme indiqué dans la partie a) du présent exemple et une quantité de cocatalyseur, à

savoir TNHA, telle que le rapport du nombre d'atomes d'aluminium issu du cocatalyseur au nombre d'atomes de titane de la composante de titane était égal à 80.

On obtenait, avec une activité du système catalytique égale à 3100, un copolymère éthylène/butène-1 ayant une densité égale à 0,922, un indice de fusion ($MI^{2,16}_{190\,°C}$) de 1,85 et une valeur de MFR égale à 36.

Exemple 9

a) Préparation de la composante de métal de transition :

On opérait dans un réacteur de 1 litre équipé d'un dispositif d'agitation et muni d'une double enveloppe parcourue par un fluide caloporteur pour le maintien du réacteur en température.

Dans le réacteur purgé par circulation d'azote, on introduisait 60 millimoles de DBME, 15 millimoles d'HIBTAO, 1,8 millimole de MPT et 100 ml d'heptane. On obtenait une solution, qui était agitée à 80 °C durant 2 heures. Après refroidissement à la température ambiante, la solution était soumise à une chloration par injection d'HCl anhydre (0,5 mole/heure pendant 1 heure) au contenu du réacteur. On obtenait un précipité, que l'on séparait par filtration et remettait en suspension dans l'heptane. A la suspension obtenue on ajoutait 7 millimoles de $TiCl_4$, puis maintenait le milieu réactionnel sous agitation pendant 1 heure à température ambiante. Le contenu du réacteur était alors filtré et la fraction solide recueillie était séchée, puis stockée en boîte à gants sous atmosphère inerte.

Le solide obtenu, qui constitue la composante de métal de transition suivant l'invention, renfermait, en poids, 13,6 % de Mg, 6 % d'Al, et 2,1 % de Ti.

b) Polymérisation d'éthylène en suspension au contact d'un système catalytique obtenu à partir de la composante de métal de transition :

On opérait dans un réacteur muni d'un agitateur tournant avec une vitesse de rotation de 350 tours/minute, ledit réacteur étant chauffé à la température de 85 °C pendant toute la durée de la polymérisation.

Dans le réacteur agité, après séchage et purge à l'azote, on introduisait successivement 2,5 l d'heptane sec, 6 millimoles de TNHA (cocatalyseur), 0,6 millimole de MPT (donneur d'électrons) et 50 mg de la composante de titane, obtenue comme indiqué dans la partie a) de cet exemple, en suspension dans une huile hydrocarbonée. On injectait alors dans le réacteur 1 bar d'hydrogène puis 5 bars d'éthylène, et maintenait ensuite la pression à l'intérieur du réacteur à la valeur 6 bars par injection d'éthylène.

Après 1 heure de réaction, on arrêtait la polymérisation par décompression du réacteur et addition au contenu de ce dernier de 20 ml d'un mélange de méthanol et d'HCl à 10 % en poids d'HCl, et l'on recueillait le polyéthylène formé par filtration du milieu réactionnel. Le polyéthylène obtenu, produit avec une activité de 14 000, présentait une densité de 0,961, un indice de fusion ($MI^{2,16}_{190\,°C}$) égal à 0,06 et une valeur de MFR de 36,7.

c) Polymérisation de propène en suspension au contact d'un système catalytique obtenu à partir de la composante de métal de transition :

On opérait dans un réacteur muni d'un agitateur tournant avec une vitesse de rotation de 350 tours/minute, ledit réacteur étant maintenu à 65 °C pendant toute la durée de la polymérisation.

Dans le réacteur agité, après séchage et purge à l'azote, on introduisait successivement 2,5 l d'heptane sec, 12 millimoles de tri-isobutylaluminium (cocatalyseur) sous la forme d'un complexe avec le para-anisate d'éthyle (donneur d'électrons), dans un rapport molaire tri isobutylaluminium : para-anisate d'éthyle égale à 3, et 100 mg de la composante de titane, obtenue comme décrit dans la partie a) du présent exemple. On injectait alors dans le réacteur 10 bars de propène, et maintenait ensuite la pression à l'intérieur du réacteur à cette valeur par injection additionnelle de propène.

Après deux heures de réaction, on arrêtait la polymérisation par décompression du réacteur puis addition au contenu de ce dernier de 20 ml d'un mélange de méthanol et d'HCl à 10 % en poids d'HCl, et l'on recueillait le polypropylène formé par filtration du milieu réactionnel. Le polypropylène obtenu, produit avec une activité du système catalytique égale à 3 000, possédait un indice d'isotacticité de 94 %.

Par indice d'isotacticité on entend la valeur, exprimée en pour cents, du rapport du poids du résidu solide d'une extration du polypropylène au n-heptane en opérant au Soxhelt pendant deux heures, au poids de polypropylène soumis à l'extraction. Cette valeur correspond à la proportion pondérale de la fraction dite stéréorégulière dans le polypropylène.

Exemples 10 à 12

a) Préparation de la composante de métal de transition :

On opérait dans un réacteur de 1 litre équipé d'un dispositif d'agitation et muni d'une double enveloppe parcourue par un fluide caloporteur pour le maintien du réacteur en température.
Dans le réacteur purgé par circulation d'azote, on introduisait 20 g de silicie, 60 millimoles du composé DBME, du TIBAO à titre de composé aluminoxane, et 100 ml d'heptane. On obtenait une suspension, qui était maintenue sous agitation pendant 2 heures à 80 °C. Après retour à la température ambiante, la suspension était filtrée et la fraction solide recueillie était suspendue à nouveau dans l'heptane. La suspension produite était soumise à une chloration par addition d'HCl anhydre. Le milieu réactionnel résultant de la chloration était filtré puis remis en suspension dans l'heptane. La suspension formée était alors additionnée de 10 millimoles de $TiCl_4$ et le tout était maintenu sous agitation, à température ambiante, pendant 1 heure. Le milieu réactionnel résultant de ce traitement était alors filtré et le solide recueilli était séché, puis stocké en boîte à gants sous atmosphère inerte.

Les conditions opératoires spécifiques à chaque exemple ainsi que les résultats d'analyse de la composante de titane obtenue sont donnés dans le tableau III.

Tableau III

| EXEMPLE | TIBAO (millimoles) | Analyse de la composante de métal de transition (%en poids) | | |
|---|---|---|---|---|
| | | Mg | Ti | Al |
| 10 | 15 | 4,1 | 1 | 1,9 |
| 11 | 60 | 3,7 | 1,1 | 2,9 |
| 12 | 7,5 | 4,3 | 1,2 | 1,1 |

b) Polymérisation d'éthylène et de butène-1 en phase gazeuse au contact d'un système catalytique obtenu à partir de la composante de métal de transition :

On opérait comme décrit dans la partie b) de l'exemple 7 en utilisant des quantités variables de la composante de titane préparée comme indiqué dans la partie a) du présent exemple et de cocatalyseur, à savoir TNHA. Les conditions opératoires spécifiques ainsi que les caractéristiques des copolymères éthylène/butène-1 obtenus sont données dans le tableau IV.

Tableau IV

| Exemple | Composante de titane (mg) | TNHA millimoles | Activité | Caractéristiques du copolymère | | |
|---|---|---|---|---|---|---|
| | | | | densité | MI 2,16 190°C | M F R |
| 10 | 100 | 6 | 4350 | 0,924 | 1,1 | 35,4 |
| 11 | 250 | 12 | 3400 | 0,925 | 3,5 | 29,7 |
| 12 | 250 | 12 | 3800 | 0,924 | 2 | 33 |

Exemple 13

a) Préparation de la composante de métal de transition :

On opérait dans un réacteur de 1 litre équipé d'un dispositif d'agitation et muni d'une double

enveloppe parcourue par un fluide caloporteur pour le maintien du réacteur en température. Dans le réacteur purgé par circulation d'azote, on introduisait 60 millimoles de DBME, 15 millimoles d'HIBTAO et 100 ml d'heptane. On obtenait une solution, qui était agitée à 80 °C durant 2 heures. Après refroidissement à la température ambiante, la solution était soumise à une chloration par injection d'HCl anhydre (0,5 mole/heure pendant 1 heure) au contenu du réacteur. On obtenait un précipité, que l'on séparait par filtration et remettait en suspension dans l'heptane. A la suspension obtenue on ajoutait 7 millimoles de $TiCl_4$, puis maintenait le milieu réactionnel sous agitation pendant 1 heure à température ambiante. Le contenu du réacteur était alors filtré et la fraction solide résultant de cette filtration était remise en suspension dans 100 ml d'heptane.
La suspension obtenue renfermait 0,11 g/litre de titane.

b) Polymérisation d'un mélange d'éthylène et de butène-1 en masse et sous haute pression au contact d'un système catalytique obtenu à partir de la composante de métal de transition :

La polymérisation était mise en œuvre dans un réacteur agité du type autoclave ayant une capacité de 1 litre. Dans le réacteur, amené au préalable à 150 °C, on injectait un mélange d'éthylène et de butène-1 dans un rapport pondéral éthylène : butène-1 égal à 1 : 1, ainsi qu'une quantité d'hydrogène correspondant à 1,5 % de la quantité molaire globale des réactants éthylène, butène-1 et hydrogène.

A la fin de l'injection de ces composés, la pression et la température dans le réacteur atteignaient des valeurs respectivement de 1 500 bars absolus et 150 °C.

Au contenu du réacteur on ajoutait alors 5 millimoles de triéthylaluminium, en solution dans l'heptane, puis une quantité de la composante de titane en suspension dans l'heptane, obtenue comme indiqué dans la partie a) du présent exemple, correspondant à 0,1 millimole de titane, cette dernière addition provoquant un démarrage rapide de la réaction de polymérisation.

On obtenait, avec un taux de conversion massique égal à 12 % par rapport au mélange initial d'éthylène et de butène-1 injecté dans le réacteur, un copolymère éthylène/butène-1 possédant une densité égale à 0,934 et un indice de fusion (MI $^{2,16}_{190\,°C}$) de 20.

On répétait cet essai en utilisant un mélange d'éthylène et de butène-1 renfermant en poids 60 % de butène-1, les autres conditions opératoires restant inchangées, et obtenait un copolymère éthylène/butène-1 ayant une densité égale à 0,920.

**Revendications**

1. Procédé pour la préparation d'une composante de métal de transition pour un système catalytique de polymérisation d'oléfines, dans lequel on forme un produit de réaction organo-magnésium-aluminium par réaction, dans un milieu liquide, d'un composé halogéné, alcoylé ou alcoxylé de magnésium avec un composé organoaluminium, puis on soumet le produit de réaction à une chloration et à un traitement par un composé d'un métal de transition choisi par Ti, V, Zr et Cr, caractérisé en ce qu'à titre de composé organo-aluminium on utilise au moins un composé aluminoxane de formule générale

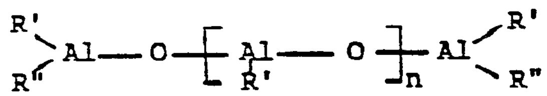

dans laquelle R' désigne un radical alcoxyle en $C_1$ à $C_{16}$, les R" forment ensemble un radical bivalent —O— ou désignent chacun un radical R', et n est un nombre entier prenant les valeurs de 0 à 20.

2. Procédé suivant la revendication 1, caractérisé en ce que le composé aluminoxane est tel que dans la formule le définissant R' désigne un radical alcoyle en $C_1$ à $C_{12}$.

3. Procédé suivant la revendication 1 ou 2, caractérisé en ce que le composé aluminoxane est tel que dans la formule le définissant, les R" forment ensemble un radical bivalent —O— ou désignent chacun un radical R', et n est un nombre entier prenant les valeurs de 0 à 12.

4. Procédé suivant la revendication 1, caractérisé en ce que le composé aluminoxane est tel que dans la formule le définissant, R' et R" désignent chacun un radical alcoyle en $C_1$ à $C_{12}$, et mieux en $C_1$ à $C_6$, et n est un nombre entier prenant les valeurs de 0 à 12, et mieux de 0 à 8.

5. Procédé suivant l'une des revendications 1 à 4, caractérisé en ce que le composé de magnésium répond à la formule Ya $Mg_m$ Xb, dans laquelle Y désigne un radical alcoyle ou alcoxy en $C_1$ à $C_{12}$, et de préférence en $C_1$ à $C_8$, X représente un radical Y ou un atome d'halogène, et de préférence en $C_1$ à $C_8$, X représente un radical Y ou un atome d'halogène, et de préférence un atome de chlore, m est un nombre égal ou supérieur à 1 tandis que a et b sont des nombres égaux ou supérieurs à Q et tels que a + b = 2 m.

6. Procédé suivant l'une des revendications 1 à 5, caractérisé en ce que les quantités du composé de magnésium et du composé aluminoxane mis en réaction sont telles que le rapport du nombre de moles du composé de magnésium au nombre de moles du composé aluminoxane soit compris entre 0,1 et 100 et se situe de préférence entre 0,5 et 20.

7. Procédé suivant l'une des revendications 1 à 6, caractérisé en ce que la réaction entre le composé de magnésium et le composé aluminoxane est mise en œuvre à une température allant de —30 °C à la température d'ébullition à pression atmosphérique du milieu liquide de réaction.

8. Procédé suivant l'une des revendications 1 à 7, caractérisé en ce que le produit de réaction entre le composé de magnésium et le composé aluminoxane est soumis à une chloration, puis on traite le produit résultant de cette chloration par le composé de métal de transition.

9. Procédé suivant l'une des revendications 1 à 7, caractérisé en ce que le produit de réaction entre le composé de magnésium et le composé aluminoxane est traité par le composé de métal de transition, puis on soumet à une chloration le produit résultant de ce traitement.

10. Procédé suivant la revendication 8 ou 9, caractérisé en ce qu'un adjuvant, consistant en un support poreux inorganique ou organique, est incorporé au produit de réaction entre le composé de magnésium et le composé aluminoxane, ladite incorporation étant réalisée soit lors de la formation du milieu de réaction entre lesdits composés, soit au cours de la réaction, ou encore lorsque la réaction est terminée.

11. Procédé suivant la revendication 8, caractérisé en ce que le produit résultant de la chloration est mis en solution dans un solvant inerte, puis on imprègne un adjuvant, consistant en un support poreux inorganique ou organique, à l'aide de cette solution et l'on traite l'adjuvant imprégné par le composé de métal de transition.

12. Procédé suivant la revendication 9, caractérisé en ce qu'un adjuvant, consistant en un support poreux inorganique ou organique, est incorporé au milieu réactionnel issu du traitement par le composé de métal de transition, avant la chloration.

13. Procédé suivant la revendication 8 ou 9, caractérisé en ce que le produit obtenu à l'issue de celles des étapes de chloration et de traitement par le composé de métal de transition, qui est la dernière dans le processus, est associé, par cobroyage ou par mélangeage en suspension dans un liquide inerte, à un adjuvant consistant en un support poreux inorganique ou organique.

14. Procédé suivant la revendication 8 ou 9, caractérisé en ce que l'on dissout dans un solvant inerte le produit obtenu à l'issue de celles des étapes de chloration et de traitement par le composé de métal de transition, qui est la dernière dans le processus, et l'on imprègne un adjuvant, consistant en un support poreux inorganique ou organique, à l'aide de ladite solution.

15. Procédé suivant l'une des revendications 10 à 14, caractérisé en ce que l'adjuvant est choisi dans le groupe formé par $SiO_2$, $TiO_2$, $Al_2O_3$, $ZrO_2$, les zéolithes et les oxydes mixtes renfermant $SiO_2$ et un ou plusieurs oxydes métalliques pris parmi $ZrO_2$, $TiO_2$, MgO et $Al_2O_3$.

16. Procédé suivant l'une des revendications 8 à 15, caractérisé en ce que la chloration est réalisée à une température allant de 0 °C à 100 °C.

17. Procédé suivant l'une des revendications 8 à 16, caractérisé en ce que l'agent de chloration est tel que chlore, $SOCl_2$, $SiCl_4$, et tout particulièrement HCl anhydre.

18. Procédé suivant l'une des revendications 8 à 17, caractérisé en ce que le traitement par le composé de métal de transition est réalisé à une température comprise entre —30 °C et 200 °C et de préférence entre 0 °C et 150 °C.

19. Procédé suivant l'une des revendications 8 à 18, caractérisé en ce que le composé de métal de transition utilisé pour le traitement est choisi parmi $TiCl_4$, $TiCl_3$, $VCl_4$, $VOCl_3$, $CrCl_3$, $CrO_3$, acétylacétonate de chrome, acétylacétonate de vanadium, et les titanates et zirconates de formules $Ti(OR)_pCl(4-p)$ et $Zr(OR)_pCl(4-p)$, avec R représentant un radical alcoyle en $C_1$ à $C_8$ et p désignant un nombre entier allant de 1 à 4.

20. Procédé suivant l'une des revendications 1 à 19, caractérisé en ce qu'un donneur d'électrons, consistant en une base de Lewis, est associé à la composante de métal de transition soit à l'issue de la préparation de cette dernière ou encore en un point quelconque de son processus d'obtention, et en particulier au cours de l'étape de réaction du composé de magnésium avec le composé aluminoxane ou à l'issue de ladite étape.

21. Procédé suivant la revendication 20, caractérisé en ce que la quantité de donneur d'électrons utilisée est telle que le rapport du nombre d'atomes de magnésium de la composante de métal de transition au nombre de molécules de donneur d'électrons soit compris entre 0,5 et 200 et de préférence entre 1 et 100.

22. Procédé suivant l'une des revendications 1 à 21, caractérisé en ce que la quantité du composé de métal de transition utilisé est telle que la composante de métal de transition renferme de 0,01 % à 40 %, et de préférence de 0,1 % à 20 %, en poids de métal de transition.

23. Système catalytique de polymérisation des oléfines résultant de l'association d'une composante de métal de tansition à un cocatalyseur choisi parmi les composés organométalliques des métaux des groupes I à III du Tableau Périodique des Eléments, et éventuellement à un donneur d'électrons, caractérisé en ce que l'on utilise une composante de métal de transition obtenue suivant l'une des revendications 1 à 22.

24. Système catalytique suivant la revendication 23, caractérisé en ce que la composante de métal de transition et le cocatalyseur sont associés dans des proportions telles que le rapport du nombre d'atomes de métal des groupes I à III du Tableau Périodique des Eléments issus du cocatalyseur au nombre d'atomes de métal de transition contenus dans ladite composante se situe entre 0,5 et 1 000 et plus

particulièrement entre 1 et 400.

25. Système catalytique suivant la revendication 23 ou 24, caractérisé en ce que le cocatalyseur est choisi parmi l'isoprénylaluminium, les composés organomagnésium de formule Ya $Mg_m$ Xb, les composés organoaluminium de formule AlR''$'_x$Cl(3-x), dans laquelle R''' désigne un radical alcoyle en $C_1$ à $C_8$ et x est un nombre tel que $1 \leq x \leq 3$ et les aluminoxanes de formule

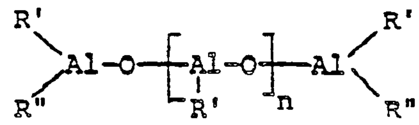

26. Système catalytique suivant la revendicaiton 25, caractérisé en ce qu'il est formé d'un prépolymère actif obtenu en mettant en contact une ou plusieurs alpha-oléfines en $C_4$ à $C_{12}$ avec un système catalytique résultant de l'association de la composante de métal de transition avec un ou plusieurs desdits cocatalyseurs, avec utilisation de 2 à 100 moles, et de préférence de 2 à 50 moles, de l'alpha-oléfine ou des alpha-oléfines en $C_4$ à $C_{12}$ par atome gramme de métal de transition présent dans la composante de métal de transition, ou de l'association dudit prépolymère actif avec au moins l'un desdits cocatalyseurs.

27. Procédé de synthèse d'un polymère ou copolymère oléfinique par mise en contact d'une ou plusieurs oléfines avec un système catalytique résultant de l'association d'une composante de métal de transition avec un cocatalyseur, et éventuellement un donneur d'électrons, caractérisé en ce que le système catalytique utilisé est celui suivant l'une des revendications 23 à 26.

28. Procédé suivant la revendication 27, caractérisé en ce que la polymérisation est effectuée en solution ou suspension dans un milieu liquide inerte ou encore en masse dans l'une au moins des oléfines maintenue à l'état liquide.

29. Procédé suivant la revendication 27, caractérisé en ce que la polymérisation est effectuée en phase gazeuse.

30. Procédé suivant l'une des revendications 27 à 29, caractérisé en ce que l'oléfine ou les oléfines utilisées sont choisies parmi les mono-oléfines en $C_2$ à $C_{12}$, et notamment parmi l'éthylène, le propène, le butène-1, et l'hexène-1.

31. Procédé suivant la revendication 29, caractérisé en ce que l'on polymérise un mélange d'éthylène et d'une ou plusieurs alpha-oléfines en $C_3$ à $C_{12}$, notamment propène, butène-1, hexène-1, méthyl-4 pentène-1 et octène-1, ledit mélange renfermant, lorsqu'il est au contact du système catalytique, une proportion molaire d'alpha-oléfines en $C_3$ à $C_{12}$ comprise entre 0,1 et 90 %, et de préférence entre 1 et 60 %.

32. Procédé suivant la revendication 27, caractérisé en ce que l'on polymérise en masse, sous des pressions allant de 200 à 3 500 bars et des températures comprises entre 130 °C et 350 °C, de l'éthylène ou un mélange d'éthylène et d'une ou plusieurs alpha-oléfines en $C_3$ à $C_{12}$.

33. Procédé suivant la revendication 32, caractérisé en ce que ladite polymérisation en masse est réalisée en faisant appel au système catalytique suivant la revendication 26.

**Claims**

1. Process for the preparation of a transition metal constituent for a catalyst system for olefin polymerization, in which an organomagnesiumaluminium reaction product is formed by reacting a halo-, alkyl- or alkoxymagnesium compound with an organoaluminium compound, in a liquid medium, and then subjecting the reaction product to a chlorination and to a treatment with a compound of a transition metal chosen from Ti, V, Zr and Cr, characterized in that the organoaluminium compound used is at least one aluminoxane compound of general formula

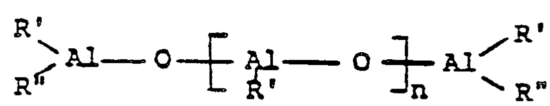

in which R' denotes a $C_1$-$C_{16}$ alkyl radical, the radicals R'' together form a divalent radical —O— or each denotes a radical R', and n is an integer assuming the values from 0 to 20.

2. Process according to Claim 1, characterized in that the aluminoxane compound is such that in the formula which defines it R' denotes a $C_1$-$C_{12}$ alkyl radical.

3. Process according to Claim 1 or 2, characterized in that the aluminoxane compound is such that in the formula which defines it the radicals R'' together form a divalent radical —O— or each denotes a radical R', and n is an integer assuming the values from 0 to 12.

4. Process according to Claim 1, characterized in that the aluminoxane compound is such that in the formula which defines it R' and R'' each denote a $C_1$-$C_{12}$, and preferably $C_1$-$C_6$, alkyl radical, and n is an

integer assuming the values from 0 to 12, and preferably from 0 to 8.

5. Process according to one of Claims 1 to 4, characterized in that the magnesium compound corresponds to the formula Ya $Mg_m$ Xb, in which Y denotes a $C_1$-$C_{12}$, preferably $C_1$-$C_8$, alkyl or alkoxy radical, X denotes a radical Y or a halogen atom, and preferably a chlorine atom, m is a number equal to or greater than 1, while a and b are numbers equal to or greater than 0 and such that $a + b = 2$ m.

6. Process according to one of Claims 1 to 5, characterized in that the quantities of the magnesium compound and of the aluminoxane compound which are made to react are such that the ratio of the number of moles of the magnesium compound to the number of moles of the aluminoxane compound is between 0.1 and 100 and preferably lies between 0.5 and 20.

7. Process according to one of Claims 1 to 6, characterized in that the reaction between the magnesium compound and the aluminoxane compound is effected at a temperature ranging from —30 °C to the boiling point of the liquid reaction medium at atmospheric pressure.

8. Process according to one of Claims 1 to 7, characterized in that the product of reaction between the magnesium compound and the aluminoxane compound is subjected to a chlorination, and the product resulting from this chlorination is treated with the transition metal compound.

9. Process according to one of Claims 1 to 7, characterized in that the product of reaction between the magnesium compound and the aluminoxane compound is treated with the transition metal compound, and the product resulting from this treatment is then subjected to a chlorination.

10. Process according to Claim 8 or 9, characterized in that an adjuvant consisting of a porous inorganic or organic carrier is incorporated in the product of the reaction between the magnesium compound and the aluminoxane compound, the said incorporation being performed either during the formation of the medium for the reaction between the said compounds, or during the reaction, or when the reaction is finished.

11. Process according to Claim 8, characterized in that the product resulting from the chlorination is dissolved in an inert solvent, and then an adjuvant consisting of a porous inorganic or organic carrier is impregnated by means of this solution and the impregnated adjuvant is treated with the transition metal compound.

12. Process according to Claim 9, characterized in that an adjuvant consisting of a porous inorganic or organic carrier is incorporated in the reaction medium produced by the treatment with the transition metal compound, before the chlorination.

13. Process according to Claim 8 or 9, characterized in that the product obtained at the end of that stage of the chlorination and transition metal compound treatment stages which is the last one in the process is combined, by cogrinding or by mixing in suspension in an inert liquid, with an adjuvant consisting of a porous inorganic or organic carrier.

14. Process according to Claim 8 or 9, characterized in that the product obtained at the end of that stage of the chlorination and transition metal compound treatment stages which is the last one in the process is dissolved in an inert solvent and that an adjuvant consisting of a porous inorganic or organic carrier is impregnated by means of the said solution.

15. Process according to one of Claims 10 to 14, characterized in that the adjuvant is chosen from the group consisting of $SiO_2$, $TiO_2$, $Al_2O_3$, $ZrO_2$, the zeolites and the mixed oxides containing $SiO_2$ and one or more metal oxides taken from $ZrO_2$, $TiO_2$, MgO and $Al_2O_3$.

16. Process according to one of Claims 8 to 15, characterized in that the chlorination is performed at a temperature ranging from 0 °C to 100 °C.

17. Process according to one of Claims 8 to 16, characterized in that the chlorinating agent is such as chlorine, $SOCl_2$, $SiCl_4$, and most especially anhydrous HCl.

18. Process according to one of Claims 8 to 17, characterized in that the treatment with the transition metal compound is performed at a temperature of between —30 °C and 200 °C and preferably between 0 °C and 150 °C.

19. Process according to one of Claims 8 to 18, characterized in that the transition metal compound used for the treatment is chosen from $TiCl_4$, $TiCl_3$, $VCl_4$, $VOCl_3$, $CrCl_3$, $CrO_3$, chromium acetylacetonate, vanadium acetylacetonate, and titanates and zirconates of formulae $Ti(OR)_pCl(4-p)$ and $Zr(OR)_pCl(4-p)$, with R denoting a $C_1$-$C_8$ alkyl radical and p denoting an integer ranging from 1 to 4.

20. Process according to one of Claims 1 to 19, characterized in that an electron-donor consisting of a Lewis base is combined with the transition metal constituent either at the end of the preparation of the latter or else at any point in the process for obtaining it, and especially during the stage of reaction of the magnesium compound with the aluminoxane compound or at the end of the said stage.

21. Process according to Claim 20, characterized in that the quantity of the electron-donor which is used is such that the ratio of the number of magnesium atoms of the transition metal constituent to the number of molecules of electron-donor is between 0.5 and 200, preferably between 1 and 100.

22. Process according to one of Claims 1 to 21, characterized in that the quantity of the transition metal compound which is used is such that the transition metal constituent contains from 0.01 % to 40 %, and preferably from 0.1 % to 20 %, by weight of transition metal.

23. Catalyst system for olefin polymerization, resulting from the combination of a transition metal constituent with a cocatalyst chosen from the organometallic compounds of the metals of Groups I to III of the Periodic Table of the elements, and optionally with an electron-donor, characterized in that a

transition metal constituent obtained according to one of Claims 1 to 22 is used.

24. Catalyst system according to Claims 23, characterized in that the transition metal constituent and the cocatalyst are combined in such proportions that the ratio of the number of atoms of metal of Groups I to III of the Periodic Table of the elements obtained from the cocatalyst to the number of transition metal atoms present in the said constituent lies between 0.5 and 1 000 and more particularly between 1 and 400.

25. Catalyst system according to Claim 23 or 24, characterized in that the cocatalyst is chosen from isoprenylaluminium, the organomagnesium compounds of formula Ya $Mg_m$ Xb, the organoaluminium compounds of formula $AlR''' _xCl(3-x)$, in which R''' denotes a $C_1$-$C_8$ alkyl radical and x is a number such that $1 \leq x \leq 3$ and the aluminoxanes of formula

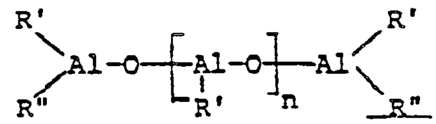

26. Catalyst system according to Claim 25, characterized in that it consists of a reactive prepolymer produced by bringing one or more $C_4$-$C_{12}$ alpha-olefins into contact with a catalyst system resulting from the combination of the transition metal constituent with one or more of the said cocatalysts, with the use of 2 to 100 moles, and preferably from 2 to 50 moles, of the $C_4$-$C_{12}$ alpha-olefin or alpha-olefins per gram-atom of transition metal present in the transition metal constituent, or from the combination of said reactive prepolymer with at least one of the said cocatalysts.

27. Process for the synthesis of an olefin polymer or copolymer by bringing one or more olefins into contact with a catalyst system resulting from the combination of a transition metal constituent with a cocatalyst, and optionally an electron-donor, characterized in that the catalyst system used is that according to one of Claims 23 to 26.

28. Process according to Claim 27, characterized in that the polymerization is performed in solution or suspension in an inert liquid medium or else in bulk in at least one of the olefins which is maintained in a liquid state.

29. Process according to Claim 27, characterized in that the polymerization is performed in the gas phase.

30. Process according to one of Claims 27 to 29, characterized in that the olefin or olefins used is or are chosen among $C_2$-$C_{12}$ monoolefins, and especially from ethylene, propylene, 1-butene and 1-hexene.

31. Process according to Claim 29, characterized in that a mixture of ethylene and one or more $C_3$-$C_{12}$ alphaolefins, especially propylene, 1-butene, 1-hexene, 4-methyl-1-pentene and 1-octene, is polymerized, the said mixture containing, when in contact with the catalyst system, a molar proportion of $C_3$-$C_{12}$ alpha-olefins of between 0.1 and 90 %, and preferably between 1 and 60 %.

32. Process according to Claim 27, characterized in that ethylene or a mixture of ethylene with one or more $C_3$-$C_{12}$ alpha-olefins is polymerized in bulk, at pressures ranging from 200 to 3 500 bars and temperatures of between 130 °C and 350 °C.

33. Process according to Claim 32, characterized in that the said bulk polymerization is performed with the aid of the catalyst system according to Claim 26.

**Patentansprüche**

1. Verfahren zur Herstellung einer Übergangsmetallverbindung für ein katalytisches System zur Polymerisation von Olefinen, in dem man ein Organomagnesiumaluminium-Reaktionsprodukt durch Reaktion in flüssiger Umgebung zwischen einer halogenierten, alkylierten oder alkoxylierten Magnesiumverbindung mit einer Organoaluminiumverbindung herstellt, und dann das Reaktionsprodukt einer Chlorierung und einer Behandlung mit einer Verbindung eines Übergangsmetalls, das unter Ti, V, Zr und Cr gewählt wird, unterwirft,
dadurch gekennzeichnet, daß man als Organoaluminiumverbindung mindestens eine Aluminoxan-Verbindung der allgemeinen Formel verwendet

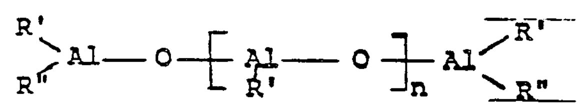

in der R' ein $C_1$-$C_{16}$-Alkylradikal bedeutet, die Reste R'' zusammen ein zweiwertiges Radikal —O— bilden oder jeweils ein Radikal R' bedeuten, und n eine ganze Zahl zwischen 0 und 20 ist.

2. Verfahren nach Anspruch 1, dadurch gekennzeichnet, daß in der Formel der Aluminoxanverbindung R' ein $C_1$-$C_{12}$-Alkylradikal bedeutet.

3. Verfahren nach Anspruch 1 oder 2, dadurch gekennzeichnet, daß in der Formel der Aluminoxanverbindung die Reste R'' zusammen ein zweiwertiges Radikal —O— bilden oder jeweils einen Rest R' bedeuten, und n eine ganze Zahl zwischen 0 und 12 ist.

4. Verfahren nach Anspruch 1, dadurch gekennzeichnet, daß in der Formel der Aluminoxanverbindung R' und R" jeweils ein $C_1$-$C_{12}$, vorzugsweise ein $C_1$-$C_6$-Alkylradikal, bedeuten und n eine ganze Zahl zwischen 0 und 12, vorzugsweise zwischen 0 und 8, ist.

5. Verfahren nach einem der Ansprüche 1 bis 4, dadurch gekennzeichnet, daß die Magnesiumverbindung die Formel Ya $Mg_m$ Xb besitzt, in der Y ein $C_1$-$C_{12}$, vorzugsweise $C_1$-$C_8$-Alkyl- oder -Alkoxyradikal bedeutet, X ein Radikal Y oder ein Halogenatom, vorzugsweise ein Chloratom, ist, und m eine Zahl größer oder gleich 1 ist, während a und b Zahlen größer oder gleich 0 sind, wobei $a + b = 2$ m ist.

6. Verfahren nach einem der Ansprüche 1 bis 5, dadurch gekennzeichnet, daß die Mengen der Magnesiumverbindung und der Aluminoxanverbindung, die in die Reaktion eingesetzt werden, so sind, daß das Verhältnis der Molzahl der Magnesiumverbindung zur Molzahl der Aluminoxanverbindung zwischen 0,1 und 100 und vorzugsweise zwischen 0,5 und 20 ist.

7. Verfahren nach einem der Ansprüche 1 bis 6, dadurch gekennzeichnet, daß die Reaktion zwischen der Magnesiumverbindung und der Aluminoxanverbindung bei einer Temperatur zwischen —30° C und der Siedetemperatur des flüssigen Reaktionsmediums bei Atmosphärendruck durchgeführt wird.

8. Verfahren nach einem der Ansprüche 1 bis 7, dadurch gekennzeichnet, daß das Reaktionsprodukt zwischen der Magnesiumverbindung und der Aluminoxanverbindung einer Chlorierung unterworfen wird und daß man dann das Produkt dieser Chlorierung mit der Übergangsmetallverbindung behandelt.

9. Verfahren nach einem der Ansprüche 1 bis 7, dadurch gekennzeichnet, daß das Reaktionsprodukt zwischen der Magnesiumverbindung und der Aluminoxanverbindung mit der Übergangsmetallverbindung behandelt wird und daß man das Produkt dieser Behandlung dann einer Chlorierung unterwirft.

10. Verfahren nach Anspruch 8 oder 9, dadurch gekennzeichnet, daß ein aus einem porösen anorganischen oder organischen Träger bestehendes Hilfsmittel in das Reaktionsprodukt zwischen der Magnesiumverbindung und der Aluminoxanverbindung inkorporiert wird, wobei diese Inkorporation entweder bei der Bildung des Reaktionsmilieus zwischen den Verbindungen oder im Laufe der Reaktion oder nach Beendigung der Reaktion durchgeführt wird.

11. Verfahren nach Anspruch 8, dadurch gekennzeichnet, daß das bei der Chlorierung erhaltene Produkt in Lösung in einem inerten Lösungsmittel eingesetzt wird, das man dann ein aus einem porösen anorganischen oder organischen Träger bestehendes Hilfsmittel mittels dieser Lösung imprägniert, und daß man das imprägnierte Hilfsmittel mit der Übergangsmetallverbindung behandelt.

12. Verfahren nach Anspruch 9, dadurch gekennzeichnet, daß ein aus einem porösen anorganischen oder organischen Träger bestehendes Hilfsmittel in das Reaktionsmilieu aus der Behandlung mit der Übergangsmetallverbindung vor der Chlorierung inkorporiert wird.

13. Verfahren nach Anspruch 8 oder 9, dadurch gekennzeichnet, daß das Produkt, das am Ende derjenigen Stufe der Chlorierung oder der Behandlung mit der Übergangsmetallverbindung anfällt, die die letzte im Verfahrensablauf ist, durch Zusammenmahlen oder durch Mischung in Suspension in einer inerten Flüssigkeit mit einem Hilfsmittel assoziiert wird, das aus einem porösen anorganischen oder organischen Träger besteht.

14. Verfahren nach Anspruch 8 oder 9, dadurch gekennzeichnet, daß man in einem inerten Lösungsmittel, das Produkt das am Ende derjenigen Stufe der Chlorierung oder der Behandlung mit der Übergangsmetallverbindung erhalten wird, die die letzte im Verfahrensablauf ist, löst, und daß man ein aus einem porösen anorganischen oder organischen Träger bestehendes Hilfsmittel mit Hilfe dieser Lösung imprägniert.

15. Verfahren nach einem der Ansprüche 10 bis 14, dadurch gekennzeichnet, daß das Hilfsmittel aus der Gruppe ausgewählt wird, die gebildet wird von $SiO_2$, $TiO_2$, $Al_2O_3$, $ZrO_2$, den Zeolithen und den gemischten Oxiden, die $SiO_2$ und eines oder mehrere Metalloxide enthalten, die unter $ZrO_2$, $TiO_2$, MgO und $Al_2O_3$ ausgewählt werden.

16. Verfahren nach einem der Ansprüche 8 bis 15, dadurch gekennzeichnet, daß die Chlorierung bei einer Temperatur zwischen 0 °C und 100 °C durchgeführt wird.

17. Verfahren nach einem der Ansprüche 8 bis 16, dadurch gekennzeichnet, daß das Chlorierungsmittel Chlor, $SOCl_2$, $SiCl_4$ und insbesondere wasserfreies HCl sein kann.

18. Verfahren nach einem der Ansprüche 8 bis 17, dadurch gekennzeichnet, daß die Behandlung mit der Übergangsmetallverbindung bei einer Temperatur zwischen —30 °C und 200 °C, vorzugsweise zwischen 0 °C und 150 °C, durchgeführt wird.

19. Verfahren nach einem der Ansprüche 8 bis 18, dadurch gekennzeichnet, daß die zur Behandlung verwendete Übergangsmetallverbindung ausgewählt wird unter $TiCl_4$, $TiCl_3$, $VCl_4$, $VOCl_3$, $CrCl_3$, $CrO_3$, Chromacetylacetonat, Vanadium-acetylacetonat, den Titanaten und Zirkonaten der Formeln $Ti(OR)_pCl(4-p)$ und $Zr(OR)_pCl(4-p)$ wobei R ein $C_1$-$C_8$-Alkylradikal und p eine ganze Zahl zwischen 1 und 4 ist.

20. Verfahren nach einem der Ansprüche 1 bis 19, dadurch gekennzeichnet, daß ein aus einer Lewis-Base bestehender Elektronendonator mit der Übergangsmetallverbindung entweder nach der Herstellung dieser letzteren oder auch zu einem beliebigen Zeitpunkt während des Herstellungsverfahrens, insbesondere im Verlauf der Stufe der Reaktion der Magnesiumverbindung mit der Aluminoxanverbindung oder am Ende dieser Stufe, assoziiert wird.

21. Verfahren nach Anspruch 20, dadurch gekennzeichnet, daß die eingesetzte Menge des Elektronendonators derart ist, daß das Verhältnis der Atomzahl des Magnesiums der Übergangsmetallverbindung zur Molekülzahl des Elektronendonators zwischen 0,5 und 200, vorzugsweise zwischen 1 und 100, ist.

22. Verfahren nach einem der Ansprüche 1 bis 21, dadurch gekennzeichnet, daß die Menge der eingesetzten Übergangsmetallverbindung derart ist, daß die Verbindung des Übergangsmetalls zwischen 0,01 Gew.% bis 40 Gew.%, vorzugsweise 0,1 Gew.% bis 20 Gew.%, Übergangsmetall enthält.

23. Katalytisches System zur Polymerisation von Olefinen, erhältlich durch Assoziation einer Übergangsmetallverbindung mit einem Cokatalysator, der unter den Organometallverbindungen der Metalle der Gruppen I bis III des Periodensystems gewählt wird, und gegebenenfalls mit einem Elektronendonator, dadurch gekennzeichnet, daß man eine Übergangsmetallverbindung verwendet, die nach einem der Ansprüche 1 bis 22 erhalten wurde.

24. Katalytisches System nach Anspruch 23, dadurch gekennzeichnet, daß die Übergangsmetallverbindung und der Cokatalysator in solchen Mengen assoziiert werden, daß das Verhältnis der Atomzahl von Metall der Gruppen I bis III des Periodensystems aus dem Cokatalysator zur Zahl der Atome des Übergangsmetalls, die in der genannten Verbindung enthalten sind, zwischen 0,5 und 1 000, insbesondere zwischen 1 und 400, liegt.

25. Katalytisches System nach Anspruch 23 oder 24, dadurch gekennzeichnet, daß der Cokatalysator ausgewählt wird unter dem Isoprenylaluminium, den Organomagnesiumverbindungen der Formel Ya $Mg_m$ Xb, den Organoaluminiumverbindungen der Formel $AlR''_xCl(3-x)$, in der R'' ein $C_1$-$C_8$-Alkylradikal und x eine Zahl eines Werts $1 \leq x\ 3 \leq$ bedeuten, und den Aluminoxanen der Formel :

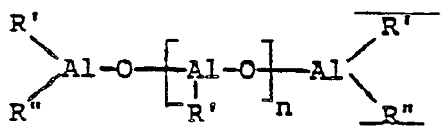

26. Katalytisches System nach Anspruch 25, dadurch gekennzeichnet, daß es aus einem aktiven Prepolymeren besteht, das erhalten wird, indem man ein oder mehrere $C_4$-$C_{12}$-alpha-Olefine mit einem katalytischen System in Kontakt bringt, das bei der Assoziation der Übergangsmetallverbindung mit einem oder mehreren der genannten Cokatalysatoren erhalten wird, unter Verwendung von 2 bis 100, vorzugsweise 2 bis 50 Mol, des oder der $C_4$-$C_{12}$-alpha-Olefine je Grammatom Übergangsmetall, das in der Übergangsmetallverbindung vorliegt, oder das bei der Assoziation des genannten aktiven Prepolymeren mit mindestens einem der genannten Cokatalysatoren erhalten wird.

27. Syntheseverfahren für ein olefinisches Polymer oder Copolymer durch In-Kontakt-Bringen eines oder mehrerer Olefine mit einem katalytischen System, das bei der Assoziation einer Übergangsmetallverbindung mit einem Cokatalysator und gegebenenfalls einem Elektronendonator erhalten wird, dadurch gekennzeichnet, daß das verwendete katalytische System das nach einem der Ansprüche 23 bis 26 erhaltene ist.

28. Verfahren nach Anspruch 27, dadurch gekennzeichnet, daß die Polymerisation in Lösung oder in Suspension in einem inerten flüssigen Medium oder auch in Masse in wenigstens einem der in flüssigem Zustand gehaltenen Olefine durchgeführt wird.

29. Verfahren nach Anspruch 27, dadurch gekennzeichnet, daß die Polymerisation in der Gasphase durchgeführt wird.

30. Verfahren nach einem der Ansprüche 27 bis 29, dadurch gekennzeichnet, daß das oder die verwendeten Olefine ausgewählt werden unter den $C_2$-$C_{12}$-Monoolefinen, insbesondere Ethylen, Propylen, Buten-1 und Hexen-1.

31. Verfahren nach Anspruch 29, dadurch gekennzeichnet, daß man eine Mischung von Ethylen und einem oder mehreren $C_3$-$C_{12}$-alpha-Olefinen, insbesondere Propen, Buten-1, Hexen-1, 4-Methylpenten-1 und Octen-1, polymerisiert, wobei die Mischung, wenn sie mit dem katalytischen System in Kontakt ist, einen molaren Anteil an $C_3$-$C_{12}$-alpha-Olefinen zwischen 0,1 und 90 %, vorzugsweise zwischen 1 und 60 %, enthält.

32. Verfahren nach Anspruch 27, dadurch gekennzeichnet, daß man unter Drücken zwischen 200 und 3 500 bar und bei Temperaturen zwischen 130 °C und 350 °C, in Masse von Ethylen oder einer Mischung von Ethylen und einem oder mehreren $C_3$-$C_{12}$-alpha-Olefinen polymerisiert.

33. Verfahren nach Anspruch 32, dadurch gekennzeichnet, daß die Polymerisation in Masse unter Verwendung des katalytischen Systems nach Anspruch 26 durchgeführt wird.